# FASCICULE DE BREVET EUROPEEN

(11) **EP 1 059 203 B1**
(45) Date de publication et mention de la délivrance du brevet: **17.12.2003**
(21) Numéro de dépôt: 00401572.3
(22) Date de dépôt: 05.06.2000
(51) Int. Cl.: B60R 5/04

(54) **Dispositif pour retenir et articuler une tablette arrière amovible de véhicule automobile**
Vorrichtung zum halten und anlenken einer abnehmbaren Kraftfahrzeugheckplatte
Device for holding and hinging a removable parcel shelve for vehicles

(30) Priorité: 11.06.1999 FR 9907417
(43) Date de publication de la demande: 13.12.2000
(60) Demande divisionnaire: 03291980.5
(73) Titulaire: Sai Automotive Sommer Industrie, 92748 Nanterre (FR)
(72) Inventeur: Blanchard, Christophe, 08210 Mouzon (FR); Habert, Cedric, 08200 Sedan (FR)
(74) Mandataire: Lerner, François

(56) Documents cités:
- EP-A- 0 927 663
- WO-A-96/32301
- DE-A- 2 647 104
- DE-A- 19 723 838
- DE-A- 19 735 439
- DE-C- 3 808 083
- FR-A- 2 641 506

## Description

L'invention a pour objet un dispositif pour retenir et articuler une tablette arrière amovible de véhicule automobile.

Il est souvent utile, en particulier dans le cas des véhicules présentant un hayon, d'une part de faire pivoter la tablette arrière pour faciliter l'accès au coffre et d'autre part de retirer la tablette arrière pour augmenter la capacité de chargement du coffre.

DE-A-26 47107 décrit un dispositif selon le préambule de la revendication 1 dont la tablette comprend une partie principale et au moins une langue sensiblement plane, ledit dispositif comprenant outre ladite tablette :
- un support destiné à être fixé au véhicule,
- des moyens d'articulation pour faire pivoter la tablette par rapport au support autour d'un axe de rotation,
- des moyens de retenue comprenant une première partie et une deuxième partie, ladite deuxième partie étant formée par ladite langue, ces moyens de retenue s'engageant l'un dans l'autre pour retenir la tablette par rapport au support et se désengageant pour libérer la tablette, par déformation élastique.

En outre, la première partie des moyens de retenue du dispositif décrit dans DE-A-26 47107 est montée pivotante sur le support, afin de permettre la rotation de la tablette par rapport au support.

FR-A-2 641 506 décrit un dispositif se distinguant de celui décrit dans DE-A-26 47107 en ce qu'il comprend en outre un axe de pivotement circulaire, lié à la tablette et maintenu dans le support par un ressort exerçant un appui élastique sur l'axe de pivotement.

La déformation élastique des moyens de retenue permet de pouvoir retenir ou libérer la tablette, en exerçant un léger effort sur la tablette pour engager ou désengager les moyens de retenue.

Toutefois, l'invention vise à proposer un dispositif plus simple et donc moins cher que ceux décrit dans DE-A-26 47107 et FR-A-2 641506.

Pour ce faire, la tablette comprend en outre une charnière interposée entre sa partie principale et chacune de ses langues.

Ainsi, il n'est pas nécessaire de prévoir, comme décrit dans DE-A-26 47107, un élément monté mobile par rapport au support et retenant la tablette, ni un axe circulaire rapporté sur la tablette, comme décrit dans FR-A-2 641 506.

Le nombre de pièces du dispositif est donc réduit, ce qui facilite sa fabrication et son utilisation, et réduit son coût.

Avantageusement, la (les) langue(s) et la première partie des moyens de retenue intégreront de matière, pour l'un, au moins un creux et pour l'autre au moins un bossage, de telle sorte que le(s) bossage(s) s'insère(nt) élastiquement dans le(s) creux et retienne(nt) la tablette par rapport au support.

De manière complémentaire, l'invention propose en outre que la première partie des moyens de retenue comprenne au moins une fente, de forme complémentaire de celle de la (des) langue(s) dans laquelle (lesquelles) chaque langue est destinée à être insérée pour y être maintenue par rapport au support et une surface d'appui prolongeant chaque fente pour faciliter l'insertion de la (des) langues dans la (les) fente(s).

La surface d'appui guidant la langue à proximité de la fente, son insertion est relativement aisée. Cette solution est par conséquent pratique d'emploi et en outre simple donc relativement robuste.

En variante, l'invention propose que la langue présente au moins un creux et la première partie des moyens de retenue comprenne une surface d'appui et au moins une lame flexible destinée à s'insérer dans le creux de la langue pour retenir ladite langue et l'appliquer contre la surface d'appui.

Une autre réalisation conforme à l'invention, permettant également une utilisation aisée, consiste en ce que la langue présente au moins un creux et la première partie des moyens de retenue comprenne au moins un pion destiné à s'insérer dans le creux de la langue sous l'action d'un élément élastique.

L'invention va apparaître encore plus clairement dans la description qui va suivre, faite en référence aux dessins annexés dans lesquels :
- la figure 1 est une vue en perspective d'un dispositif conforme à l'invention,
- la figure 2 est une vue en coupe du dispositif de la figure 1, suivant le plan repéré I-I à la figure 1, la tablette n'étant pas retenue par rapport au support,
- la figure 3 est une vue en coupe similaire à la figure 2 d'une première variante de dispositif conforme à l'invention, la tablette étant retenue par rapport au support,
- la figure 4 est une vue en coupe similaire à la figure 2 d'une deuxième variante de dispositif conforme à l'invention,

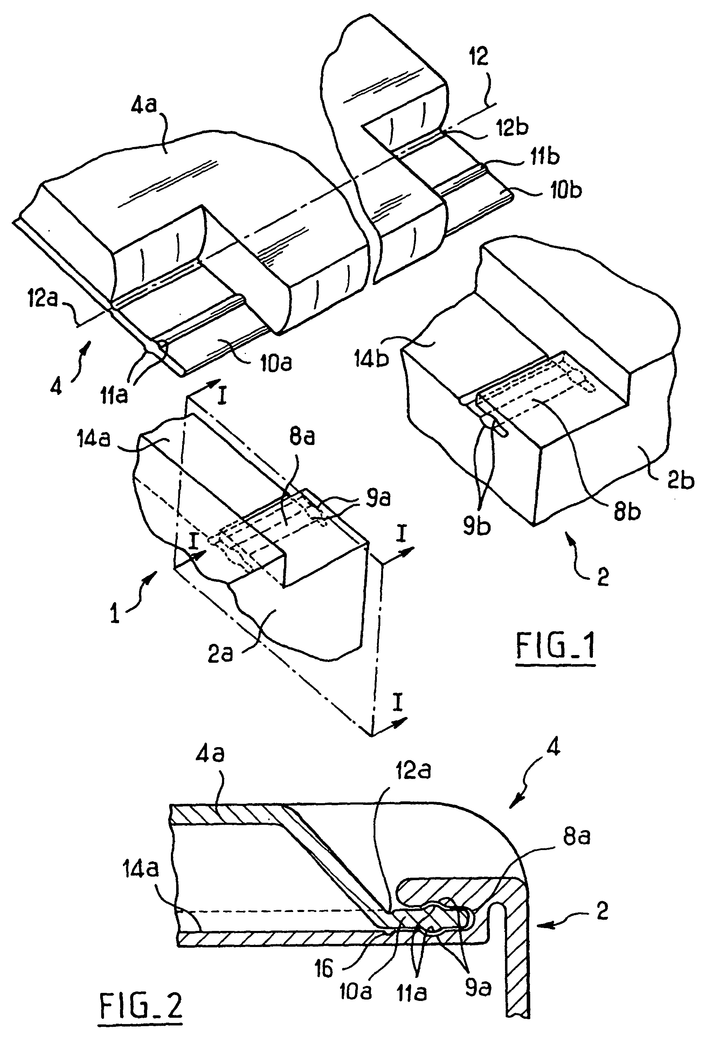

Les figures 1 et 2 illustrent un dispositif 1 comprenant essentiellement une tablette arrière 4 de véhicule, généralement à base de matière plastique et/ou de feutre, et un support 2, généralement à base de matière plastique, destiné à recevoir la tablette.

La tablette 4 comprend une partie principale structurée 4a destinée à constituer une séparation entre le coffre et l'habitacle du véhicule et deux langues 10a,10b disposés dans deux coins avant de la tablette 4. Les langues 10a, 10b sont sensiblement planes et reliées chacune à la partie principale 4a de la tablette par une charnière 12a,12b présentant un axe d'articulation commun 12. En l'espèce, les charnières 12a, 12b consistent en une réduction locale d'épaisseur.

Le support 2 comprend deux éléments latéraux 2a, 2b. Ces éléments support 2a, 2b présentent chacun une surface d'appui 14a, 14b et une fente 8a, 8b sensiblement dans le prolongement de la surface d'appui correspondante.

Ces fentes 8a, 8b présentent des formes complémentaires de celles des langues 10a,10b pour les maintenir par rapport à chacun des éléments support 2a, 2b. En particulier, les fentes 8a, 8b intègrent chacune des creux 9a, 9b dans lesquelles viennent se loger des bossages 11a, 11b correspondants intégrés à chacune des langues 10a, 10b.

Par ailleurs, les surfaces d'appui 14a, 14b présentent chacune des rainures transversales 16 en regard des charnières 12a, 12b, afin d'éviter des problèmes de coincement lors de la rotation de la tablette 4.

Pour mettre en place la tablette, l'utilisateur insère les langues 10a, 10b en regard des fentes 8a, 8b. Pour cela, l'utilisateur peut poser les langues 10a,10b de la tablette 4 sur les surfaces d'appui 14a, 14b guidant les langues jusqu'aux fentes 8a, 8b.

Ensuite, l'utilisateur pousse sur la tablette pour insérer les bossages 11a, 11b dans les creux 9a, 9b par déformation élastique. L'ensemble des creux et des bossages assure la retenue de la tablette en maintenant les langues 10a,10b à l'intérieur des fentes 8a, 8b.

En variante, les deux langues pourraient se rejoindre, de façon à constituer une unique langue s'étendant sur toute la largeur de la tablette.

On aurait également pu remplacer les creux par des bossages et inversement.

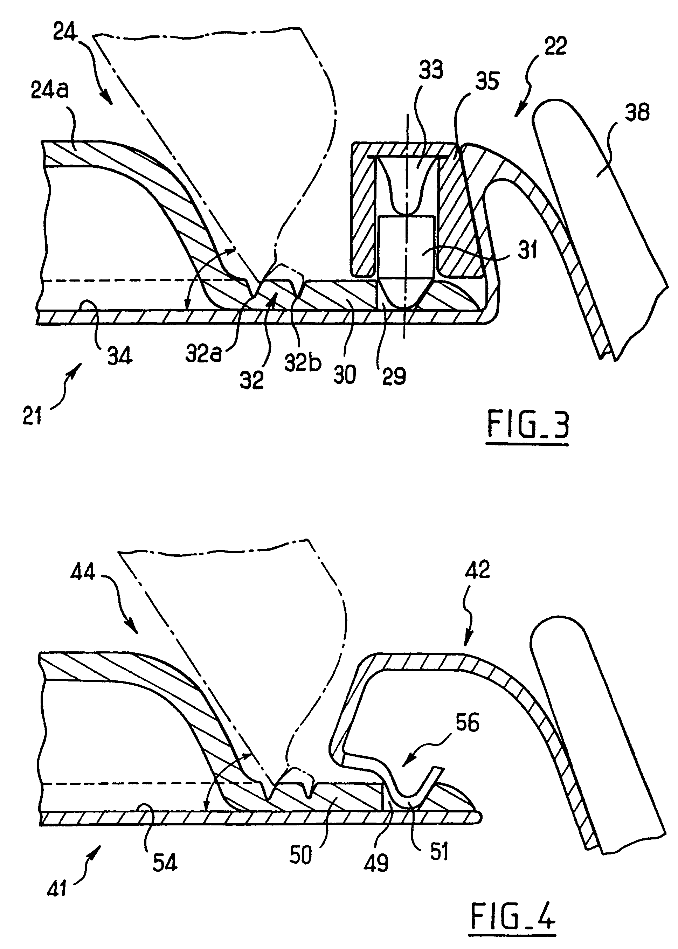

La figure 3 illustre une variante 21 de dispositif comprenant toujours une tablette 24 et un support 22 composé de deux éléments latéraux. La tablette monobloc 24 intègre de moulage une partie principale 24a, une langue 30 sensiblement plane s'étendant sur toute la largeur de la tablette 24 et une charnière 32. La charnière est interposée entre la langue 30 et la partie principale 24a de la tablette. Elle est ici constituée par deux rainures 32a, 32b.

Le dispositif 21 se distingue essentiellement du dispositif précédent 1 en ce que la langue 30 présente deux trous 29 à la place des bossages 11a, 11b dans lesquels viennent s'insérer deux pions 31 formant bossages à la place des creux 9a, 9b.

Les pions 31 sont maintenus dans les trous 29 sous la pression d'un élément élastique, ici un doigt en caoutchouc 33 et appuient sur la langue 30 pour l'appliquer sur des surfaces 34 du support 22. Chaque pion 31 est guidé dans une cage 35.fixée sur le support 22, à proximité de la banquette arrière 38 du véhicule. La tablette 24 est par conséquent retenue par sa partie avant.

La figure 3 illustre la tablette 24, en trait mixte (fantôme) en position haute, levée par rotation autour de la charnière 32 et en trait fort en position basse en appui sur les surfaces d'appui 34 des éléments supports 22.

La figure 4 illustre un dispositif 41 se distinguant essentiellement du dispositif 21 de la figure 3, en ce que chacun des deux pions 31 et des deux éléments élastiques 33 ont été remplacés par une seule pièce, une lame flexible 56, ici réalisée de matière avec chacun des éléments support 42. La tablette 44 est sensiblement identique à la tablette 24.

Ces deux lames 56 s'étendent avantageusement transversalement sur environ 10 à 20 millimètres de long et présentent des bossages 51 sensiblement coniques s'insérant dans des trous 49 ménagés dans la langue 50 de la tablette 44. Du fait de leur faible longueur, ces lames intégrées aux éléments support 42 présentent une élasticité leur permettant de retenir la langue 50 et de l'appliquer contre les surfaces d'appui 54 du support 42.

## Revendications

1. Dispositif (1) pour retenir et articuler une tablette arrière amovible de véhicule automobile, ladite tablette comprenant une partie principale (4a, 24a) et au moins une langue (10a,10b ; 30, 50) sensiblement plane et ledit dispositif comprenant outre ladite tablette (4) :
- un support (2) destiné à être fixé au véhicule,
- des moyens d'articulation (12a, 12b ; 32) pour faire pivoter la partie principale de la tablette par rapport au support autour d'un axe de rotation (12),
- des moyens de retenue comprenant une première partie (9a, 9b; 31, 33 ; 56) disposée sur le support et une deuxième partie (11a, 11b ; 29 ; 49), ladite deuxième partie étant formée par ladite langue, ces moyens de retenue s'engageant l'un dans l'autre pour retenir la tablette par rapport au support et se désengageant pour libérer la tablette, par déformation élastique,
**caractérisé en ce que** la tablette comprend en outre une charnière (12a, 12b ; 32a, 32b) interposée entre sa partie principale et chacune de ses langues.

2. Dispositif selon la revendication 1, **caractérisé en ce que** la (les) langue(s) et la première partie des moyens de retenue intègrent de matière, pour l'un, au moins un creux (9a, 9b ; 49) et pour l'autre au moins un bossage (11a, 11b ; 51), de telle sorte que le(s) bossage(s) s'insère(nt) élastiquement dans le(s) creux et retienne(nt) la tablette par rapport au support.

3. Dispositif selon la revendication 2, **caractérisé en ce que** la première partie des moyens de retenue comprend au moins une fente (8a, 8b), de forme complémentaire de celle de la (des) langue(s) dans laquelle chaque langue est destinée à être insérée pour y être maintenue par rapport au support (2), et une surface d'appui (14a, 14b) prolongeant chaque fente pour faciliter l'insertion de la (des) langues dans la (les) fente(s).

4. Dispositif selon la revendication 2, **caractérisé en ce que** la langue présente au moins un creux (49) et la première partie des moyens de retenue comprend une surface d'appui (54) et au moins une lame flexible (56) présentant un bossage (51) destiné à s'insérer dans le creux de la langue pour retenir ladite langue et l'appliquer contre la surface d'appui.

5. Dispositif selon la revendication 1, **caractérisé en ce que** la langue présente au moins un creux (29) et la première partie des moyens de retenue comprend au moins un pion (31) destiné à s'insérer dans le creux de la langue sous l'action d'un élément élastique (33).

## Patentansprüche

1. Vorrichtung (1) zum Halten und Anlenken einer abnehmbaren Kraftfahrzeugheckplatte, wobei die Platte einen Hauptteil (4a, 24a) und mindestens eine im wesentlichen flache Zunge (10a, 10b; 30, 50) aufweist, und wobei die Vorrichtung außer der Platte (4) aufweist:
- eine Stütze (2), die dazu bestimmt ist, an dem Fahrzeug befestigt zu werden,
- Anlenkmittel (12a, 12b; 32), um den Hauptteil der Platte bezüglich der Stütze um eine Drehachse (12) schwenken zu lassen,
- Haltemittel, die einen ersten an der Stütze angeordneten Teil (9a, 9b; 31, 33; 56) und einen zweiten Teil (11a, 11b; 29; 49) aufweisen, wobei der zweite Teil durch die Zunge gebildet ist, diese Haltemittel miteinander in Eingriff kommen, um die Platte bezüglich der Stütze zu halten und durch elastische Verformung außer Eingriff kommen, um die Platte freizusetzen,
**dadurch gekennzeichnet, daß** die Platte femer ein Scharnier (12a, 12b; 32a, 32b) aufweist, das zwischen ihrem Hauptteil und jeder ihrer Zungen angeordnet ist.

2. Vorrichtung nach Anspruch 1, **dadurch gekennzeichnet, daß** die Zunge(n) und der erste Teil der Haltemittel für das eine mindestens eine Vertiefung (9a, 9b; 49) haben und für das andere mindestens einen Buckel (11a, 11b; 51), derart, daß der (die) Buckel sich elastisch in die Vertiefung(en) einpaßt (einpassen) und die Platte bezüglich der Stütze zurückhält (zurückhalten).

3. Vorrichtung nach Anspruch 2, **dadurch gekennzeichnet, daß** der erste Teil der Haltemittel mindestens einen Schlitz (8a, 8b) aufweist, der in der Form komplementär zu dem der Zunge(n) ist, in welchen jede Zunge eingefügt werden soll, um dort bezüglich der Stütze (2) gehalten zu werden, und eine Stützfläche (14a, 14b) aufweist, die jeden Schlitz verlängert, um das Einfügen der Zunge(n) in den Schlitz (die Schlitze) zu erleichtern.

4. Vorrichtung nach Anspruch 2, **dadurch gekennzeichnet, daß** die Zunge mindestens eine Vertiefung (49) aufweist und der erste Teil der Haltemittel eine Stützfläche (54) und mindestens ein flexibles Blatt (56) aufweist, das einen Buckel (51 ) hat, der dazu bestimmt ist, in die Vertiefung der Zunge eingefügt zu werden, um die Zunge zu halten und sie gegen die Stützfläche aufzubringen.

5. Vorrichtung nach Anspruch 1, **dadurch gekennzeichnet, daß** die Zunge mindestens eine Vertiefung (29) aufweist, und daß der erste Teil der Haltemittel mindestens einen Pion (31) aufweist, der dazu bestimmt ist, in die Vertiefung der Zunge unter der Wirkung eines elastischen Elements (33) eingefügt zu werden.

## Claims

1. Device (1) for holding and articulating a removable rear shelf of a motor vehicle, said shelf comprising a main part (4a, 24a) and at least one substantially flat tongue (10a, 10b; 30, 50) and said device comprising, in addition to said shelf (4):
- a support (2) which is to be secured to the vehicle,
- articulation means (12a, 12b; 32) for causing the main part of the shelf to pivot relative to the support about an axis of rotation (12),
- holding means comprising a first part (9a, 9b; 31, 33; 56) located on the support, and a second part (11a, 11b; 29; 49), said second part being formed by said tongue, these holding means engaging one in the other in order to hold the shelf relative to the support and disengaging, in order to free the shelf, by resilient deformation,
**characterised in that** the shelf also comprises a hinge (12a, 12b; 32a, 32b) interposed between its main part and each of its tongues.

2. Device according to claim 1, **characterised in that** the tongue(s) and the first part of the holding means integrally incorporate, in the case of the one, at least one recess (9a, 9b; 49) and, in the case of the other, at least one boss (11a, 11b; 51), in such a manner that the boss(es) is (are) inserted resiliently in the recess(es) and hold(s) the shelf relative to the support.

3. Device according to claim 2, **characterised in that** the first part of the holding means comprises at least one slot (8a, 8b) which has a shape complementary to that of the tongue(s) and in which each tongue is to be inserted in order to be maintained there relative to the support (2), and a bearing surface (14a, 14b) extending each slot in order to facilitate the insertion of the tongue(s) in the slot (s).

4. Device according to claim 2, **characterised in that** the tongue has at least one recess (49) and the first part of the holding means comprises a bearing surface (54) and at least one flexible strip (56) having a boss (51) which is to be inserted in the recess of the tongue in order to hold said tongue and place it against the bearing surface.

5. Device according to claim 1, **characterised in that** the tongue has at least one recess (29) and the first part of the holding means comprises at least one pin (31) which is to be inserted in the recess of the tongue under the action of a resilient member (33).
